# EUROPEAN PATENT APPLICATION

(11) **EP 4 681 518 A1**
(43) Date of publication of application: **21.01.2026**
(21) Application number: 24189712.3
(22) Date of filing: 19.07.2024
(51) Int. Cl.: A01B 45/02

(54) **TOOL HOLDING DEVICE FOR PIERCING TOOLS OF A SOIL WORKING DEVICE**

(71) Applicant: Redexim B.V., 3709 JA Zeist (NL)
(72) Inventor: de Bree, Cornelis Herman G., 3709 JA Zeist (NL)
(74) Representative: dompatent

(57) **Abstract**

A Tool holding device (1) for piercing tools (2) of a soil working device (4) for creating cavities in a soil (5) is provided, with
- at least one basic tool body (6) which can be coupled with a machine frame (30) of the soil working device (4),
- several tool-receiving-cavities (10) in the basic tool body (6), into each of which a piercing tool (2) can be inserted, whereby the cross-sections of the tool-receiving-cavity (10) are adapted to the cross-sections of the piercing tools (2) to be received,
- at least one fastening device (12) per tool-receiving-cavity (10), with which the piercing tools (2) can be fastened in the tool-receiving-cavity (10),
wherein the at least one fastening device (12) has a fastening-receiving region (14) into which the respective piercing tool (2) can be introduced when it is inserted into the tool-receiving-cavity (10), wherein, when the respective fastening device (12) is tightened, at least one clamping surface (16) of the respective fastening-receiving region (14) can be pressed against at least one piercing tool (2) introduced into the respective fastening-receiving region (14) in such a way that the introduced piercing tool (2) can be clamped between the clamping surface (16) of the respective fastening-receiving region (14) and at least one surface (18) of the respective tool-receiving-cavity (10).

## Description

The invention relates to a tool holding device for piercing tools of a soil working device according to claim 1.

Soil working devices for creating cavities in a soil are known. The soil working device comprises at least one tool holding device, preferably several tool holding devices. The tool holding devices are preferably coupled to a machine frame. Furthermore, a plurality of piercing tools are provided which are inserted into the at least one tool holding device, wherein the piercing tools together with the at least one tool holding device can be moved up and down relative to the machine frame and can thus be pierced into the soil and pulled out again. The tool holding device usually comprises at least one basic tool body which can be coupled with a machine frame of the soil working device. Furthermore, several tool-receiving-cavities are often provided in the basic tool body, into each of which a piercing tool can be inserted, whereby the cross-sections of the tool-receiving-cavity are adapted to the cross-sections of the piercing tools to be received. Furthermore, at least one fastening device per tool-receiving-cavity can also be provided, with which the piercing tools can be fastened in the tool-receiving-cavity.

The piercing tools wear out during operation of the soil working device and are replaced regularly. There is an increasing need to simplify replacement.

The object of the present invention is therefore to create a tool holding device in which the replacement of the piercing tools is simplified.

The features of claim 1 provide a solution to this problem.

The invention advantageously provides that the at least one fastening device has a fastening-receiving region into which the respective piercing tool can be introduced when it is inserted into the tool-receiving-cavity, wherein, when the respective fastening device is tightened, at least one clamping surface of the respective fastening-receiving region can be pressed against at least one piercing tool introduced into the respective fastening-receiving region in such a way that the introduced piercing tool can be clamped between the clamping surface of the respective fastening-receiving region and at least one sur-face of the respective tool-receiving-cavity

The present invention has the advantage that the replacement of the piercing tools is considerably simplified. Only one fastening device per tool-receiving-cavity has to be determined in order to fasten the respective piercing tool to the tool holding device.

Furthermore, the manufacture of the tool holding device and the fastening device is also simplified.

By clamping the piercing tools with a larger surface, the likelihood of releasing the tool during work is reduced.

In the conventional tine holder, the clamping bolts that secure the tines sometimes break, leaving a threaded stud inside the tine holder. Removing these studs requires drilling them out, which is a time-consuming task. This issue is addressed by the new invention, as when one clamping device breaks, it can be easily replaced without any additional machining required to repair the tine holder.

A recess for the fastening device can be provided in the tool base body, into which recess the fastening device is inserted, the recess for the fastening device and the tool-receiving-cavity intersecting in such a way that a fastening device inserted into the recess can be placed in such a way that a piercing tool to be inserted into the tool-receiving-cavity can also be inserted into the fastening-receiving region.

The fastening device can comprise a fastener by means of which the fastening device can be fastened, so that the piercing tool inserted into the tool-receiving-cavity can be fixed.

The recess for the fastening device in the tool base body can comprise a first opening into which the fastening device can be inserted into the recess.

The recess for the fastening device in the tool base body can comprise a second opening, at least a part of the fastener of the fastening device extending through the second opening when the fastening device is inserted in the recess, so that in the inserted state the locking device partially protrudes from the tool base body.

The second opening can be smaller than the first opening.

The second opening can be so small that the fastening device can neither be inserted through the second opening into the recess nor can it be carried out.

The fastener can comprise a helical element and a nut.

The fastening-receiving region of the fastening device can be a cylindrical hollow in the fastening device.

The tool-receiving-cavity can have a cylindrical shape.

According to the present invention, a soil working device for creating cavities in a soil may be provided, comprising at least one tool holding device according to any one of claims 1 to 10, wherein the soil working device comprises:
- at least one machine frame movable in the direction of travel,
- a plurality of piercing tools, which are inserted in the at least one tool holding device, wherein the piercing tools can be moved up and down relative to the machine frame and can thus be inserted into the floor and withdrawn again.

In the following, with reference to the drawings, embodiments of the present invention are explained in more detail.

It shows schematically:
Fig. 1 a soil working device in side view,
Fig. 2 a tool holding device,
Fig. 3 a section of the tool holding device from Fig. 2, and
Fig. 4 a fastening device.

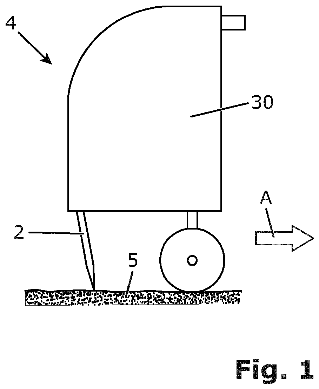

Fig. 1 shows a side view of a mobile soil working device 4, which is self-propelled or can be towed by a tractor. This soil working device 4 comprises a machine frame 30, in which several piercing tools 2, which can be moved up and down, are pivotably mounted.

The piercing tools 2 can be pressed into the soil 5 and can perform a tilting movement in the soil 5 due to the movement of the soil working device in the direction of travel A, in which the soil 5 is broken up below the piercing hole, thereby improving the drainage of the soil 5, for example. In doing so, the piercing hole, which is a cavity in the soil 5, should remain as small as possible despite the travel speed of the soil working device 4.

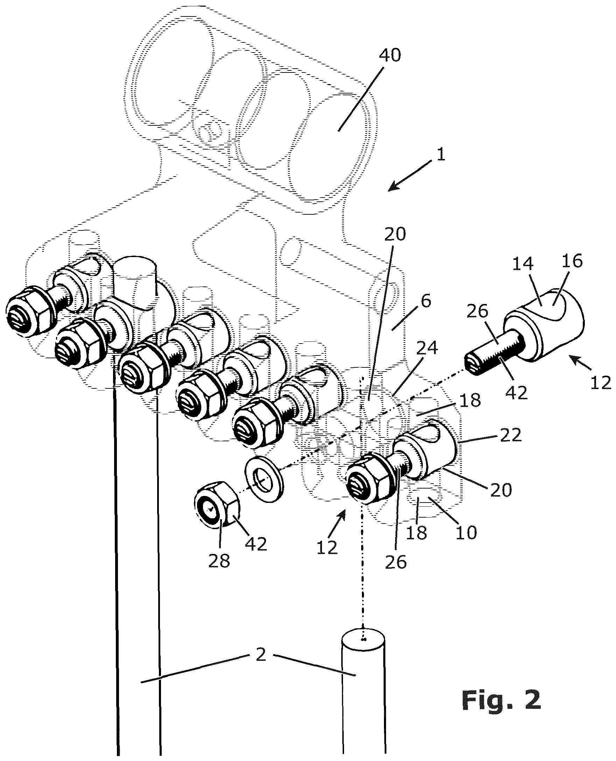

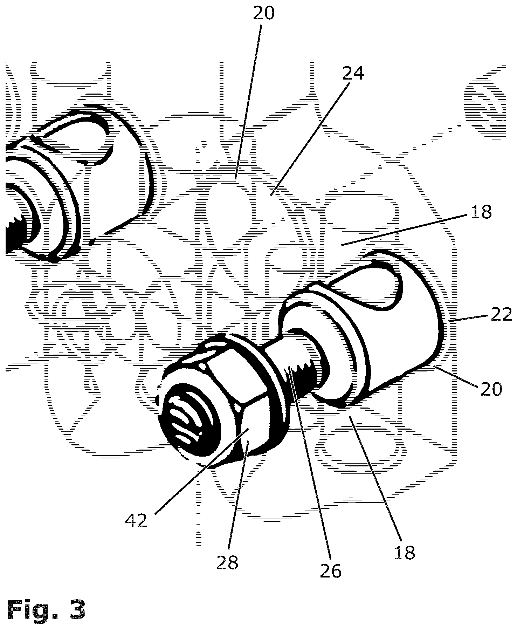

The piercing tools 2 are fastened to a tool holding device 1. The tool holding device 1 is described in more detail with reference to Figs. 2 and 3. The piercing tools can comprise different lengths, shapes and diameters. The tool holding device 1 may be coupled to the machine frame 30. The tool holding device 1 can be guided by a guide element. The guide element can, for example, perform an up and down movement driven by a crank drive. Alternatively, it is also possible to drive the guide element hydraulically or electrically.

The at least one tool holding device 1 can be pivotably mounted on the guide element about a pivot axis. The at least one tool holding device 1 preferably accommodates several piercing tools 2, which can be inserted into the soil 5 and pulled out again due to the up and down movement. Several tool holding devices 1, preferably arranged next to each other, can be driven. The tool holding devices 1 are preferably driven out of phase.

Fig. 2 shows a tool holding device 1 according to the invention. The upper region 40 of the tool holding device 1 can be coupled to the machine frame 30 of the soil working device 4. For example, the tool holding device 1 can be coupled to the machine frame via a guide element as described above.

The tool holding device 1 comprises a basic tool body 6. Preferably in the lower area of the basic tool body 6, several tool-receiving-cavities 10 are provided for the reception of piercing tools 2. In Fig. 2, only two piercing tools 2 are shown, for example. In operation, however, one piercing tool 2 would preferably be inserted into each tool-receiving cavity 10. The cross-sections of the tool-receiving cavities 10 are preferably adapted to the cross-sections of the piercing tools 2 to be received.

At least one fastening device is provided for each tool-receiving-cavity 10, by means of which the piercing tools 2 can be fixed in the respective tool-receiving-cavity 10.

The at least one fastening device 12 comprises at least one fastening-receiving region 14, into which the respective piercing tool 2 can be inserted when it is inserted into the respective tool-receiving-cavity 10.

As can be seen in Figs. 2 and 3, the fastening device 12 is provided in such a way that the fastening-receiving region 14 and the tool-receiving cavity 10 are aligned with one another in such a way that the piercing tool 2 is inserted into the fastening-receiving region 14 when the piercing tool 2 is inserted into the tool-receiving cavity 10.

When the respective fastening device 12 is fixed, at least one clamping surface 16 of the respective fastening-receiving region 14 can be pressed against at least one piercing tool 2 inserted into the respective fastening-receiving region 14 in such a way that the inserted piercing tool 2 can be clamped between the clamping surface 16 of the respective fastening-receiving region 14 and at least one surface 18 of the respective tool-receiving-cavity 10.

At least one recess 20 for the respective fastening device 12 is provided in the basic tool body 6, into which the fastening device can be inserted. The recess 20 and the tool-receiving cavity 10 can intersect in such a way that a fastening device 12 inserted into the recess 20 can be placed in such a way that a piercing tool 2 to be inserted into the tool-receiving cavity 10 can also be inserted into the fastening-receiving region 14.

The fastening device 12 can comprise a fastener 42, by means of which the fastening device 12 can be locked, so that the piercing tool 2 inserted into the tool-receiving-cavity 10 can be fixed.

The fastener 42 may comprise a helical element 26 and a nut 28.

The recess 20 may comprise a first opening 22 on a first side of the basic tool body 6 for the fastening device 12. The fastening device 12 may be inserted into the recess 20 through the first opening 22. Furthermore, as shown in Figs. 2 and 3, the recess 20 may comprise a second opening 24 for the fastening device 12 on a second side of the basic tool body 6 opposite the first side. The second opening 24 is preferably smaller than the first opening 22.

At least a part of the fastener 42 of the fastening device 12 can extend through the second opening 24 when the fastening device 12 has been inserted into the recess 20. In the inserted state, the fastener 42 can thus protrude from the basic tool body 6. This can be seen in Figs. 2 and 3. There, the respective fasteners 42 protrude from the basic tool body.

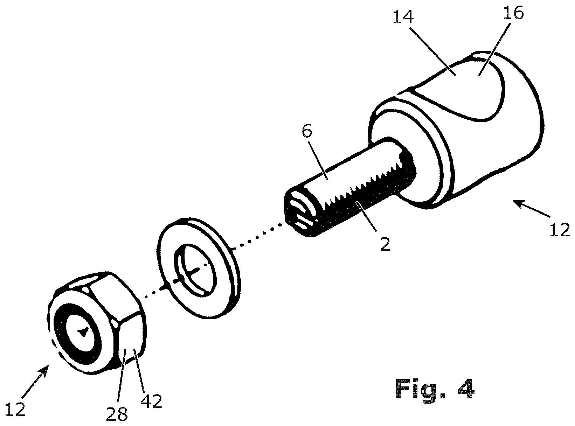

In the embodiment example shown, as can be seen in more detail in Fig. 4, the fastener 42 comprises a helical element 26 and a nut 28. The helical element 26 is inserted through the second opening 24 when the fastening device 12 is inserted into the recess 20.

When the nut 28 is tightened, the fastening device 12 pulls in the direction of the nut 28, thereby pressing the clamping surface 16 against the piercing tool 2 positioned in the fastening-receiving region 14. As a result, the piercing tool 2 is also moved in the direction of the nut 28 and presses against the surface 18 in the tool-receiving-cavity 10.

The piercing tool 2 is thereby clamped between the clamping surface 16 of the fastening-receiving region 14 and the surface 18 of the tool-receiving-cavity 10, whereby it is fixed or fastened to the basic tool body.

The recess 20 must be shaped in such a way that the fastening device 12 can be moved relative to the basic tool body 6 so that the respective piercing tool 2 can be clamped.

Fig. 3 shows a section of Fig. 2. Fig. 3 shows once again in detail how the fastening device 12 is provided in the recess 20. It is also easy to see how the recess 20 and the tool-receiving-cavity 10 intersect.

Fig. 4 shows the fastening device 12 according to the invention in more detail. The fastening-receiving region 14 can be seen, which, as in the embodiment example shown, can be a cylindrical hollow. The piercing tool 2 can be guided through this fastening-receiving region 14.

| | |
|---|---|
| tool holding device | 1 |
| piercing tool | 2 |
| soil working device | 4 |
| soil | 5 |
| basic tool body | 6 |
| tool-receiving-cavity | 10 |
| fastening device | 12 |
| fastening-receiving region | 14 |
| clamping surface | 16 |
| surface | 18 |
| recess | 20 |
| first opening | 22 |
| second opening | 24 |
| helical element | 26 |
| nut | 28 |
| machine frame | 30 |
| fastener | 42 |

## Claims

1. Tool holding device (1) for piercing tools (2) of a soil working device (4) for creating cavities in a soil (5), with
- at least one basic tool body (6) which can be coupled with a machine frame (30) of the soil working device (4),
- several tool-receiving-cavities (10) in the basic tool body (6), into each of which a piercing tool (2) can be inserted, whereby the cross-sections of the tool-receiving-cavity (10) are adapted to the cross-sections of the piercing tools (2) to be received,
- at least one fastening device (12) per tool-receiving-cavity (10), with which the piercing tools (2) can be fastened in the tool-receiving-cavity (10),
**characterized in that**
the at least one fastening device (12) has a fastening-receiving region (14) into which the respective piercing tool (2) can be introduced when it is inserted into the tool-receiving-cavity (10), wherein, when the respective fastening device (12) is tightened, at least one clamping surface (16) of the respective fastening-receiving region (14) can be pressed against at least one piercing tool (2) introduced into the respective fastening-receiving region (14) in such a way that the introduced piercing tool (2) can be clamped between the clamping surface (16) of the respective fastening-receiving region (14) and at least one surface (18) of the respective tool-receiving-cavity (10).

2. Tool holding device (1) according to claim 1, **characterized in that** at least one recess (20) for each of the fastening devices (12) is provided in the tool base body (6), into which recess (20) the fastening device (12) is inserted, the recess (20) for the fastening device (12) and the tool-receiving-cavity intersecting in such a way that a fastening device (12) inserted into the recess (20) can be placed in such a way that a piercing tool (2) to be inserted into the tool-receiving-cavity (10) can also be inserted into the fastening-receiving region (14).

3. Tool holding device (1) according to claim 1 or 2, **characterized in that** the fastening device (12) has a fastener (42) by means of which the fastening device (12) can be fastened, so that the piercing tool (2) inserted into the tool-receiving-cavity (10) can be fixed.

4. Tool holding device (1) according to one of claims 1 to 3, **characterized in that** the recess (20) for the fastening device (12) in the tool base body (6) has a first opening (22) into which the fastening device (12) can be inserted into the recess (20).

5. Tool holding device (1) according to claim 4, **characterized in that** the recess (20) for the fastening device (12) in the tool base body (6) has a second opening (24), at least a part of the fastener (42) of the fastening device (12) extending through the second opening (24) when the fastening device (12) is inserted in the recess (20), so that in the inserted state the locking device partially protrudes from the tool base body (6).

6. Tool holding device (1) according to claim 5, **characterized in that** the second opening (24) is smaller than the first opening (22).

7. Tool holding device (1) according to claim 6, **characterized in that** the second opening (24) is so small that the fastening device (12) can neither be inserted through the second opening (24) into the recess (20) nor can it be carried out.

8. Tool holding device (1) according to one of claims 1 to 7, **characterized in that** the fastener (42) comprises a helical element (26) and a nut (28).

9. Tool holding device (1) according to one of claims 1 to 8, **characterized in that** the fastening-receiving region (14) of the fastening device (12) is a cylindrical hollow in the fastening device (12).

10. Tool holding device (1) according to one of claims 1 to 9, **characterized in that** the tool-receiving-cavity (10) have a cylindrical shape.

11. A soil working device (4) for creating cavities in a soil (5), comprising at least one tool holding device (1) according to any one of claims 1 to 10, wherein the soil working device (4) comprises:
- at least one machine frame (30) movable in the direction of travel,
- a plurality of piercing tools (2), which are inserted in the at least one tool holding device (1), wherein the piercing tools (2) can be moved up and down relative to the machine frame (30) and can thus be inserted into the floor and withdrawn again.
